# EUROPEAN PATENT SPECIFICATION

(11) **EP 3 820 718 B1**
(45) Date of publication and mention of the grant of the patent: **02.08.2023**
(21) Application number: 19758500.3
(22) Date of filing: 26.06.2019
(51) Int. Cl.: B60C 11/03, B60C 11/16

(54) **STUDDED TYRE FOR VEHICLE WHEELS**
SPIKEREIFEN FÜR FAHRZEUGRÄDER
PNEU A CRAMPON POUR ROUES DE VEHICULES

(30) Priority: 13.07.2018 IT 201800007196
(43) Date of publication of application: 19.05.2021
(73) Proprietor: Pirelli Tyre S.p.A., 20126 Milano (IT)
(72) Inventor: BOIOCCHI, Maurizio, 20126 Milano (IT); CASAROTTO, Giovanni, 20126 Milano (IT); SPEZIARI, Diego Ettore, 20126 Milano (IT); BOLZONI, Roberto, 20126 Milano (IT); BELLUZZO, Damiano Leonardo, 20126 Milano (IT)
(74) Representative: Susanetto, Carlo
(86) International application number: PCT/IB2019/055391
(87) International publication number: WO 2020/012280

(56) References cited:
- EP-A2- 2 202 096
- JP-A- S6 294 402

## Description

The present invention relates to a studded tyre for vehicle wheels.

A tyre generally comprises a carcass structure that is in the shape of a toroid about an axis of rotation and comprises at least one carcass ply having end flaps that engage in respective annular anchoring structures, said bead cores.

A belt structure is provided in radially external position of the carcass structure and, in tyres for cars, comprises at least two strips that are radially overlaid by rubber textile fabric provided with reinforcing cords, usually metal cords, arranged inside each strip in parallel with one another but crossed with the cords of the adjacent strip, preferably symmetrically with respect to the equatorial plane of the tyre.

Furthermore, the belt structure preferably also comprises a third layer of textile or metal cords on the radial outside, at least at the ends of the above-mentioned belt strips, which cords are arranged circumferentially (at 0 degrees). In tubeless tyres, a radially internal layer is also provided, called a "liner", which is impermeable in order to ensure that said tyre is airtight.

A tread band is applied to the radial outside of the belt structure, which band is made of elastomer material and on which there is defined a tread surface that is intended to make contact with the road surface.

In order to ensure adequate road holding when the road surface is wet, the tyres comprise a tread band provided with grooves of various shapes and geometries, which delimit tread band portions that are intended to make contact with the ground, called blocks.

The main function of the grooves is to allow the water present between the surface of the tyre and the road surface to escape when these come into contact with one another, thus preventing the hydrostatic pressure originating from the impact of the water against the advancing tyre from being able to cause the tyre to lift, even in part, from the road surface and preventing the vehicle from consequently losing control.

The overall configuration of the tread band defined by all the grooves and blocks represents the tread pattern.

Said tread pattern is typically formed by the continuous repeated sequence of the same basic module over the entire circumferential extent of the tread band.

In winter tyres, small notches called "sipes" are also made in the blocks of the tread band, which sipes extend from the tread surface of the tyre towards the inside of the block. The function of the sipes is to offer further grip elements when driving on a surface covered in snow and trapping a certain amount of snow, thereby improving the grip with the road surface.

Furthermore, in winter tyres of this kind, studs are provided in the blocks of the tread band, which, thanks to a portion thereof that projects from the tread surface (pin), improves grip of the tyre on icy road surfaces.

Examples of studded tyres according to the prior art are disclosed in EP 2202096 and in JP S6294402 which shows the features of the preamble of claim 1.

The Applicant has observed that the performance of a studded tyre, both in terms of road holding (this meaning acceleration, braking and turning) and in terms of noise emissions, are highly dependent on the number and the arrangement of the studs in the tread band.

In particular, the Applicant has verified that, in order for the values to be as low as possible in respect of the noise emissions of the tyre, the studs have to be arranged in the tread band such that impact of the studs on the road surface produces a noise that is distributed over as large a spectrum of frequencies as possible in order to eliminate any possible peaks in the intensity of some frequencies.

This step of distributing the studs in the tread band requires the careful design of a distribution model for the studs, and this is more accurate when there are a larger number of studs to be positioned in the tread band.

However, the Applicant has observed that in order to offer a sufficient amount of grip on an icy road surface and to limit the separation thereof from the tread band as much as possible, a stud generally has to be positioned within a block of the tread band, preferably at a minimum spacing from the edges thereof, in order to be held in the tread band with a sufficient degree of firmness and rigidity.

However, the Applicant has observed that this requirement imposes clear restraints on the freedom with which the studs are positioned in the tread band, which restraints are determined by the specific shape and geometry of the individual blocks that form the tread pattern.

Furthermore, the Applicant has found that these restraints can be particularly stringent when the number of studs is particularly high, in particular when more than 150 studs are distributed over the entire tyre.

The Applicant has therefore perceived that, in order to produce a studded tyre that performs optimally both in terms of road holding and noise emissions, the need to correctly arrange the studs had to prevail over the need to maintain the tread pattern intact, by possibly adjusting the shape of those blocks in which, according to the preferred distribution model for optimising the performance parameters cited above, the stud would be positioned such that it touches the edge or would be positioned entirely inside a groove, which delimits the block, outside said block.

The Applicant has therefore found that a studded tyre in which the studs are arranged in the tread band in accordance with a predefined distribution model and in which the shape of at least one block is modified with respect to a reference block that is homologous thereto, by providing a projection that allows the stud to be positioned inside the block that is modified in this way whilst preventing the stud from touching the edge of the block modified in this way or from being arranged outside said block, also has excellent performance in terms of road holding as well as excellent performance in terms of noise emissions.

In particular, in a first aspect thereof, the invention relates to a studded tyre for vehicle wheels according to claim 1.

On account of the above-mentioned features, a studded tyre is produced in which the studs can be optimally distributed over the tread band without their arrangement being overly constrained by the tread pattern, and, in particular, by the specific shape of the blocks.

In particular, a bridge is in fact created between the first block and a block adjacent thereto, obstructing the separation groove.

In this way, it is possible to optimise the positioning of the studs in the tread band by appropriately axially and circumferentially offsetting them in order to reduce the noise of the tyre, which is generated by the impact of the studs on the road surface, as much as possible.

The improvement in performance in terms of noise emissions is particularly appreciable in tyres that have a large number of studs, in particular when more than 150 studs are distributed in the entire tyre.

In addition, this greater degree of arrangement freedom of the studs in the tread band advantageously makes it possible to accurately set the relative position of said studs with respect to the adjacent studs.

On account of this feature, it is possible to produce a tyre that, during the entire rolling motion on the road surface, has a substantially constant number of studs in the footprint area. This establishes greater uniformity in terms of behaviour on the road, with consequent positive effects on the performance of the tyre in terms of traction and road holding during turning.

The term "equatorial plane" of the tyre is intended to mean a plane that is perpendicular to the axis of rotation of the tyre and divides the tyre into two equal parts.

The "circumferential" direction is intended to mean a direction that is generally oriented according to the direction of rotation of the tyre or, at most, slightly inclined (no more than approximately 5°) with respect to the direction of rotation of the tyre.

The "axial" direction is intended to mean a direction that is substantially parallel to the axis of rotation of the tyre, or, at most, slightly inclined (no more than approximately 5°) with respect to said axis of rotation of the tyre. The axial direction is generally perpendicular to the circumferential direction.

The term "effective width" referring to the tread band is intended to mean the width of the radially outermost portion of the tread band (from edge to edge), which is intended to make contact with the ground.

The "central region" of the tread band is intended to mean a tread band portion that extends circumferentially about an equatorial plane of said tyre for a width that is equal to at least 30% of the effective width of the tread band, preferably for a width of between 40% and 60% of said effective width.

The central region may or may not extend symmetrically with respect to the equatorial plane.

In particular, when circumferential or almost circumferential grooves are made in the tread band, the central region can be delimited on one or both sides by one of said circumferential grooves.

The "shoulder regions" of the tread band are intended to mean the tread band portions that extend circumferentially on opposite sides of the central region in axially external position of the tread band.

Each shoulder region preferably extends for a width that is equal to at least 10% of the effective width of the tread band.

The term "groove" is intended to mean a recess made in a tread band portion that has a width that is greater than or equal to 1.5 mm, and preferably has a depth of more than 3 mm.

A groove is said to be "circumferential" when it extends in a circumferential direction or, at most, is inclined with respect to the circumferential direction by an angle of less than 5°.

A groove is said to be "transverse" when it extends in a direction that is inclined with respect to the circumferential direction by an acute angle of more than at least 10°.

The term "sipe" is intended to mean a recess made in a tread band portion that has a width that is smaller than 1.5 mm, preferably smaller than or equal to 1 mm.

The width of the sipes and grooves is intended to be measured at a depth that is greater than or equal to 1 mm, preferably greater than or equal to 1.5 mm.

In the case in which the width of the groove or of the sipe varies along its longitudinal extent, the width is considered to be an average width, the value of which is the average of the various width values that are suitably weighed on the basis of the relative longitudinal extensions. For example, if a groove has a width of 5 mm for 80% of its longitudinal extension and a width of 3 mm for the remaining 20%, the average of the width to be taken into account will be equal to 5 x 0.8 + 3 x 0.2 = 4.6 mm.

Similarly, if the width of one groove, in particular of a transverse groove, varies along the tread band depending on the length of the pitch to which it belongs, it is considered to be the average.

One end of one groove is defined as being "blind" when it is not open to another groove.

The inclination of a transverse groove with respect to a circumferential direction identified on the tread band is defined by the acute angle formed by the groove and the circumferential direction. As a specific case, a transverse groove that extends in parallel with the axis of the tyre will have an inclination of 90° with respect to the circumferential direction.

Two (or more) transverse grooves are inclined "in a concordant manner" when the profile of both grooves increases or decreases when considered on a Cartesian plane positioned on the tread band (tangentially thereto), in which the y-axis is parallel to the circumferential direction and the x-axis is parallel to the axis of the tyre.

As a result, two transverse grooves are inclined "in a discordant manner" when the profile thereof increases for one groove and decreases for the other groove, when considered in said Cartesian plane.

A groove has an inclination that "generally decreases" from a first region towards a second region when:
- for segments equal to at least 50% of the longitudinal extension of the groove between the first and the second region, the inclination of the groove decreases as it moves from the first region towards the second region, and
- for segments equal to at least 80% of the longitudinal extension of the groove between the first and the second region, the inclination of the groove does not increase as it moves from the first region towards the second region.

Two groove segments (or two grooves) are "substantially aligned" when their longitudinal axes are offset, at least at their respective ends that face one another, by an amount that is smaller than their width (for segments having different widths, the larger width is taken into consideration).

Two grooves are "successive" when they are arranged one behind the other in the tread surface, taking into consideration the rotation of the tyre in any one of the two directions of rotation. In particular, two grooves of the same type are successive when no other grooves of the same type are provided therebetween. The "tread pattern" means the overall configuration of the tread band as defined by all of the grooves and the blocks delimited by the grooves.

A "module" of the tread pattern is defined by the minimum tread band portion, a repeated sequence of which configuration is provided along the circumferential extent of the tread band in order to form said tread pattern.

A module extends between the axial ends of the tread band.

Furthermore, while maintaining an identical basic configuration, the modules can have a circumferential dimension (said "pitch") that differs slightly for each module, for example modules having two, three or four different pitches can be used on one tread band in various combinations.

A module may be formed by two or more elementary portions (or submodules), which extend between the two axial ends of the tread band and are arranged in the same sequence inside each module.

In this case, each elementary portion can have the same basic configuration in different modules but slightly different circumferential dimensions (that is "pitches"), such that each module can be formed by elementary portions having a different pitch.

For example, if a module is formed by two elementary portions, each of which can have two different circumferential dimensions (a "long pitch" and a "short pitch"), four types of modules will be possible - a first type in which both the elementary portions have a long pitch, a second type in which the first elementary portion has a long pitch and the second elementary portion has a short pitch, a third type in which the first elementary portion has a short pitch and the second elementary portion has a long pitch, and, lastly, a fourth type in which both the elementary portions have a short pitch.

The modules having two elementary portions are also called "two-pitch modules", while the modules that do not comprise at least two elementary portions (or, in other words, modules that comprise just one submodule that coincides with the module) are also called "single-pitch modules".

The long pitch has a circumferential dimension that is at least 10% longer than the short pitch.

The "footprint area" is intended to mean the tread band portion that immediately comes into contact with the road surface during the revolution of the tyre. Under real-life conditions, the footprint area is dependent on various parameters, including the tyre pressure, the load it is subjected to, the road surface and the driving conditions, for which reference values may, however, be defined.

A block is said to be "homologous" to another block when it is arranged in the same position as the other block but in a separate module to that comprising the other block.

With respect to a first block in which a stud is arranged, the "reference block" means a block that is homologous with the first block, therefore is arranged in the same position as the first block but in a separate module to that comprising the first block, and is devoid of studs or at least devoid of studs in the region in which the stud is arranged in the first block.

The reference block preferably has the same pitch as the first block.

In contrast, the reference block will be considered to have circumferential dimensions that are suitably adapted to the pitch of the first block.

The shape of the reference block is therefore fully similar to the first block unless any changes to the shape caused by the presence of the stud in the first block.

By virtually superimposing the reference block on the first block, it is possible to identify a "original edge" of the first block, which substantially corresponds to the edge that would have the first block if the shape thereof had not been modified by the provision of the stud.

Of course, if the shape of the first block has not been modified by the presence of the stud, it will correspond to the shape of the reference block and the original edge will correspond to the real edge of the first block.

In at least one of the above-mentioned aspects, the present invention can comprise at least one of the additional preferred features specified below.

A plurality of said first blocks are preferably provided on said tread band.

Said plurality of said first blocks preferably represents a fraction of less than 20% of the studded blocks provided on said tread band.

In this way, the fraction of first blocks defined on the tread band and therefore of blocks modified by the provision of a stud represents a limited fraction of the studded blocks and thus does not substantially modify the features of the tread pattern in terms of its resistance to tangential stresses and ability to remove the water.

Said plurality of said first blocks preferably represents a fraction of between 5% and 15% of the studded blocks provided on said tread band.

Within this range, it is generally possible to optimally position all the studs in the blocks, while modifying the original tread pattern as little as possible.

The groove obstructed by the projection is preferably not a main groove for discharging the water.

At least 130 studs, more preferably at least 150 studs, even more preferably at least 190 studs, are preferably arranged in said tread band.

A number of studs is preferably arranged in each module that is equal to a predefined number that may be increased or decreased by one.

Said tread band is preferably divided by an equatorial plane of said tyre into a first region and into a second region that is axially opposite said first region.

Said studs are preferably arranged in circumferential tracks that are symmetrically defined in said first and second regions at different distances from said equatorial plane.

In each module in which an even number of studs is provided, said studs are preferably evenly distributed between said first region and said second region.

In this way, the studs are uniformly distributed over the tread band, thereby guaranteeing optimum performance of the tyre in terms of traction and road holding.

In each module in which an even number of studs is arranged, said studs are preferably positioned at different distances from an equatorial plane of said tyre. In at least 90% of all of said modules, said studs are preferably positioned at different distances from an equatorial plane of said tyre.

On account of this arrangement, an improvement is made in terms of the reduction in the noise of the tyre, which advantageously makes it possible to arrange a greater number of studs in the tread band without making the overall noise caused by the tyre significantly worse.

A maximum number of said first blocks that is equal to two is preferably provided for each module.

This prevents a single module from comprising an excessive number of modified blocks, which could lead to a difference in the tyre's behaviour upon contact with the road surface.

Said predefined distribution model preferably provides that said studs are arranged such that no studs are in the same circumferential track in the footprint area.

24 circumferential tracks are preferably provided in said tread pattern.

Said circumferential tracks are preferably symmetrically defined in said first and second regions.

The features and advantages of the invention will become clearer from the detailed description of a few preferred embodiments thereof, which are illustrated by way of non-limiting example, with reference to the attached drawings, in which:

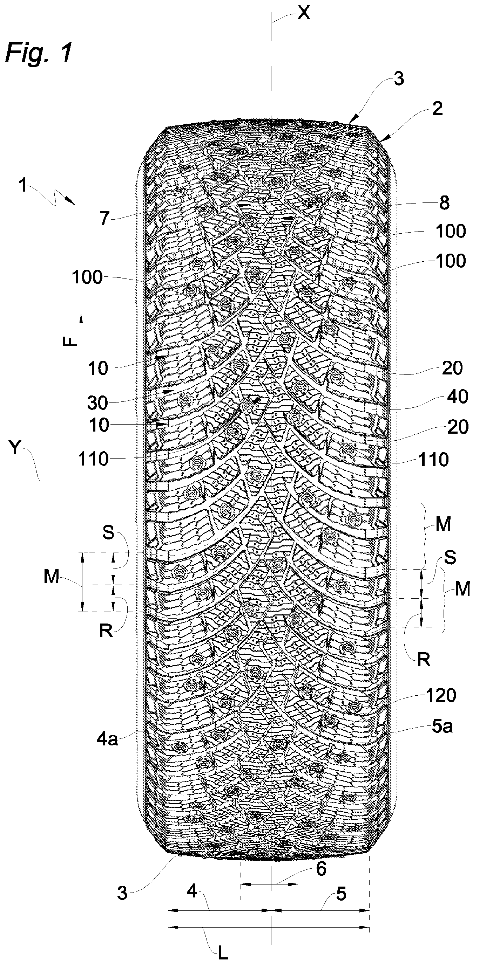

- Fig. 1 is a perspective front view of an example of a studded tyre for vehicle wheels, which is formed in accordance with the present invention;
- Fig. 2 is an enlarged schematic view of a substantial portion of the tread band of the studded tyre of Fig. 1; and
- Fig. 3 is an enlarged schematic view of a first block shown in the square III of Fig. 2.

With reference to the attached figures, 1 indicates a studded tyre for vehicle wheels as a whole, which is formed in accordance with the present invention.

The studded tyre 1 comprises a tyre structure that is conventional *per se* but is not shown in the attached figures, and a tread band 2, on which a tread surface 3, located in a radially external position and intended to make contact with a road surface, is defined.

The tyre 1 has a conventional generically toroidal shape, which extends about an axis of rotation so as to define an axial direction Y on the tread surface 3 that is parallel to said axis of rotation, and which an equatorial plane X crosses that is perpendicular to the axis of rotation and defines a circumferential direction on the tread surface 3 that is parallel to said equatorial plane.

The studded tyre 1 has a nominal section width of approximately 205 mm with a diameter of 16 inches.

An effective width L is identified on the tread band 2, which is defined as the maximum width of the tread band intended to make contact with the ground during standard use conditions, and extends between a first lateral edge 4a and a second lateral edge 5a of the tread band 2, which second lateral edge is axially opposite the first lateral edge 4a.

The tyre 1 is a directional tyre, in which a preferred direction of rotation of the tyre is defined, shown in the figures by the arrow F.

The equatorial plane X divides the tread band 2 into a first region 4, which extends from the equatorial plane X up to the first lateral edge 4a, and into a second region 5, which extends from the equatorial plane X up to the second lateral edge 5a.

A central region 6 is also defined on the tread band 2, which region straddles the equatorial plane X, so as to partially overlap with the first and the second region 4 and 5.

A plurality of central blocks, which are identified by 7 and 8 and arranged in pairs, are provided in regular succession over the circumferential extent of the central region 6.

The central blocks 7 and 8 are V-shaped and have concavities that face one another and partially fit into one another.

A plurality of first pairs of main grooves are also defined in the tread band 2, which are formed by a first and a second main groove 10 and 20 and are provided in regular succession over the circumferential extent of the tread band 2.

Each first main groove 10 extends from the first lateral edge 4a towards the equatorial plane X, while each second main groove 20 extends from the second lateral edge 5a towards the equatorial plane X.

Each first main groove 10 comprises a first axially external segment 11, which extends from the first lateral edge 4a and comprises a curvilinear profile, the inclination of which decreases with respect to the circumferential direction, and an axially internal end segment 12, which extends as a continuation of the first segment 11 until it opens into a second main groove 20 of a successive pair of main grooves.

The end segment 12 of each first main groove 10 comprises a zigzag configuration that straddles the equatorial plane X.

Each second main groove 20 comprises a first axially external segment 21, which extends from the second lateral edge 5a and has a curvilinear profile, the inclination of which decreases with respect to the circumferential direction, until it opens into the first segment 11 of the first main groove 10.

The second main groove 20 is also axially offset with respect to the first transverse groove 10.

A plurality of second pairs of main grooves are also defined in the tread band 2, which are formed by a third and a fourth main groove 30 and 40 and are provided in regular succession along the circumferential extent of the tread band 2 in an alternating position with the first pairs of main grooves 10 and 20.

Each third main groove 30 extends from the first lateral edge 4a towards the equatorial plane X up to a blind end that is inside the central block 7, while each fourth main groove 40 extends from the second lateral edge 5a towards the equatorial plane X up to a blind end that is inside the central block 8.

None of the third and fourth main grooves 30, 40 intersects another first, second, third or fourth main groove.

The third and the fourth main grooves 30 and 40 have a similar curvilinear profile that is substantially parallel to the first and the second main grooves 10 and 20.

Furthermore, the third and the fourth main grooves 30 and 40 are substantially symmetrical with respect to the equatorial plane X, even if they are axially offset with respect to one another.

All the first, second, third and fourth main grooves 10, 20, 30 and 40 have a depth of approximately 9 mm and a variable width that decreases from the lateral edges 4a, 5a, where it measures approximately 9-12 mm, towards the equatorial plane X, where it measures approximately 2.5-4 mm.

A plurality of first pairs of secondary grooves are also made in the tread band 2, which are formed by a first and a second secondary groove 50 and 60 and are provided in regular succession along the circumferential extent of the tread band 2.

Each first secondary groove 50 extends in the first region 4 between two first main grooves 10 that are mutually successive so as to intersect a third main groove 30, while each second secondary groove 60 extends in the second region 5 between two second main grooves 20 that are mutually successive so as to intersect a fourth main groove 40 in a manner that is substantially specular with respect to the first secondary groove 50 with regard to the equatorial plane X.

The first and the second secondary groove are substantially rectilinear and inclined with respect to the circumferential direction by an angle of approximately 25° in a discordant manner with respect to the inclination of the first segments 11 and 21 of the first and the second main grooves 10, 20, between which said first and second secondary grooves extend.

A plurality of second pairs of secondary grooves are also made in the tread band 2, which are formed by a third and a fourth secondary groove 70 and 80 and are provided in regular succession over the circumferential extent of the tread band 2.

Each third secondary groove 70 extends in the first region 4 between two first main grooves 10 that are mutually successive so as to be substantially parallel to a first secondary groove 50, while each fourth secondary groove 80 extends in the second region 5 between two second main grooves 20 that are mutually successive so as to be substantially parallel to a second secondary groove 60.

In addition to the central blocks 7 and 8, the grooves described above also define shoulder blocks 9a and 9b, on the tread band 2.

The shoulder blocks 9a are delimited by the first and second pairs of main grooves (10, 30 or 20 and 40) and by the first and second pairs of secondary grooves (50, 70 or 60 and 80), while the shoulder blocks 9b are delimited by the first and second pairs of main grooves (10, 30 or 20 and 40), by the second pairs of secondary grooves (70 or 80) and by the lateral edges of the tread band (4a or 5a).

The blocks and the grooves identified above define, as a whole, the tread pattern of the studded tyre 1.

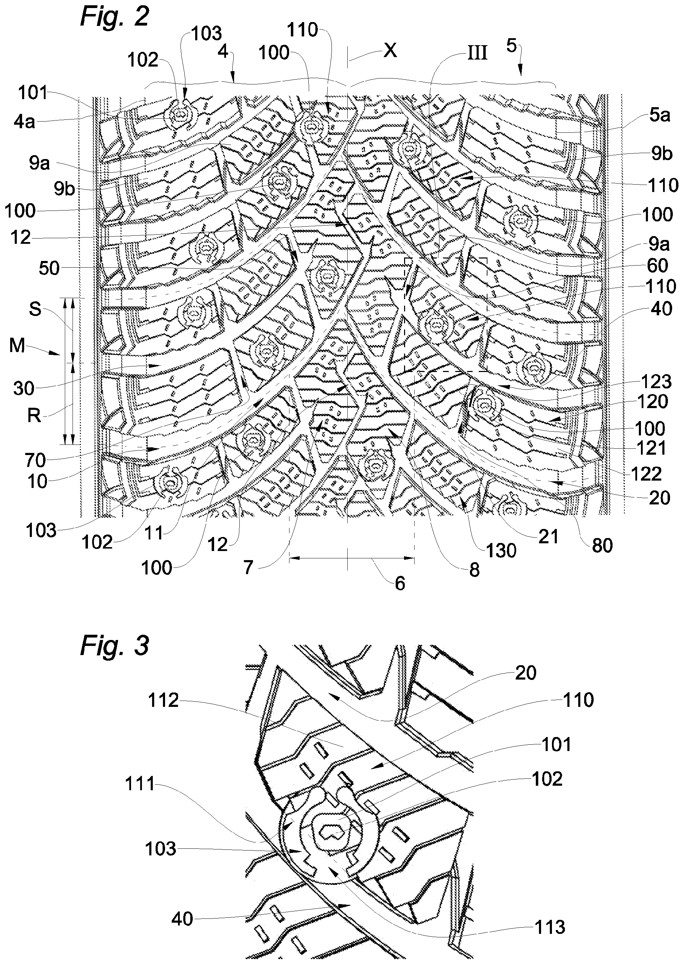

As can be easily identified in Fig. 2, the tread pattern is formed by the continuous repeated sequence of a single module M that is formed by the tread band portion arranged between two first successive pairs of main grooves 10 and 20.

Each module M is in turn formed by a first elementary portion R, which extends from a first pair of main grooves 10 and 20 up to the second pair of main grooves 30 and 40, and by a second elementary portion S, which extends from the second pair of main grooves 30 and 40 up to the first successive pair of main grooves 10 and 20.

Each first elementary portion R and each second elementary portion S can have a circumferential dimension that either corresponds to a long pitch or the size of which corresponds to a short pitch, that is shorter than the long pitch.

In particular, the long pitch is approximately 30% greater than the short pitch. Each module M can be formed by a first and a second elementary portion having a short pitch or a long pitch in various combinations.

Overall, 32 modules are arranged on the tread band 2 according to a semi-random sequence designed to minimise the noise produced by the tread pattern. Sipes are made in all the central blocks 7, 8 and shoulder blocks 9a and 9b, which sipes support the performance of the tyre on snow-covered surfaces.

As described below, a plurality of studs 100 are also arranged in the central blocks 7, 8 and the shoulder blocks 9a and 9b.

In particular, a total of 190 studs are arranged in the tread band 2.

Each stud 100 comprises a base, which is embedded inside the tread band, a head 101, which extends radially from the base towards the tread surface 3 so as to be substantially coplanar or slightly lowered with respect to said surface, and a pin 102, which extends radially from the head 101 in order to protrude from the tread surface 3.

A clearance area 103 also extends around each stud 100, thereby forming an annular band approximately 5-8 mm wide, inside which two recesses 104 are provided, which are specular with respect to one another, have a generally semicircular shape and face one another, said recesses being provided for holding ice and snow material that may be eroded by the studs 100.

The studs 100 are positioned in the tread band 2 in accordance with a suitably predefined distribution model intended to minimise the noise generated by said studs when the tyre 1 rolls on the road surface, and, at the same time, to maximise the performance of the tyre 1 on icy road surfaces, in particular in terms of traction and road holding.

According to this distribution model, the studs 100 are arranged in the blocks of the tread band in circumferential tracks that are symmetrically defined in the first and the second region 4 and 5 at predefined distances from the equatorial plane X.

In particular, 12 circumferential tracks are defined in each first and second region 4 and 5, in which the studs 100 can be arranged, with approximately 2 circumferential tracks passing through the central blocks 7 or 8, 5 circumferential tracks passing through the shoulder blocks 9a and 5 circumferential tracks passing through the shoulder blocks 9b.

The spacing between one circumferential track and another circumferential track is preferably at least 5 mm, and the spacing between the equatorial plane X of the circumferential track closest thereto is at least 9 mm.

This minimises wear of the road surface, which is caused by the action of the studs when the studded tyre is used on a road surface that is only partially covered in ice or when there is no ice, in compliance with the regulation that provides an upper limit for the quantity of asphalt removed by the studs during rolling on a road surface that is only partially covered in ice or when there is no ice.

In fact, it has been verified that the studs closest to the equatorial plane tend to erode the asphalt to a greater extent than the studs closest to the shoulders.

Furthermore, in accordance with the predefined distribution model, the studs 100 are arranged such that studs are never in the same circumferential track in the footprint area.

A predefined number of studs that is equal to 6 is provided in each module M, this number being an integer than best approximates the need to arrange 190 studs in 32 modules in a balanced fashion.

However, 5 or 7 studs can also be arranged in a module M, that is to say a number of studs that is equal to the predefined number increased or decreased by one depending on the length of the pitch of the single module and of the modules adjacent to said single module. This advantageously makes it possible to adapt the number of studs to the changes in the circumferential dimension of the module M in order to obtain a substantially uniform number of studs in the footprint area when the tyre 1 rolls on the road surface.

Furthermore, in each module M that has an even number of studs, said studs are equally split between the first region 4 and the second region 5. Therefore, in this case in which the modules have 5 or 6 or 7 studs, in the modules having six studs, three studs are arranged in the first region 4 and three studs in the second region 5.

Furthermore, in each module M having an even number of studs, the studs arranged in the first region 4 are positioned in circumferential tracks that are at distances from the equatorial plane X that are different from the circumferential tracks in which the studs arranged in the second region 5 are positioned.

In the tyre 1, each block comprises a maximum of one stud, and therefore, given that each module M comprises 10 blocks, it is possible to identify some blocks that do not comprise studs.

When designing the tyre 1, the studs 100 are positioned in the tread pattern in accordance with the distribution model mentioned above, without being thoroughly constrained by the presence of the blocks and the grooves.

In this way, a first plurality of studs 100 may not all be arranged inside a block, for example they may touch an edge of a block, or all the studs may be arranged outside the block and positioned inside a groove, while a second plurality of studs 100 can be arranged very close to an edge of the block, in particular at a distance that is smaller than the width provided for the clearance area 103.

In order to avoid this undesirable situation, the blocks comprising both the first and the second plurality of studs are suitably modified by adding a projection thereto, in which projection the stud may be arranged, as described in more detail in the following.

It should be noted that from time to time these blocks can be a central block 7 or 8 or a shoulder block 9a or 9b.

In particular, the blocks comprising the first plurality of studs 100 are identified in the following as first blocks 110, while the blocks comprising the second plurality of studs 100 are identified in the following as second blocks 120.

A few examples of first blocks 110 and second blocks 120 are denoted in Fig. 2. A maximum number of first blocks 110 that is equal to two is preferably provided for each module M.

The first blocks 110 represent approximately 12% of the total number of blocks provided with studs 100, and it is possible to identify at least one particular reference block 130 for each first block 110, which reference block is homologous with the first block and does not comprise any studs, said reference block being arranged in a corresponding position to the first block but in a separate module M to that comprising the first block.

The second blocks 120 represent approximately 22% of the total number of blocks provided with studs 100, and, similarly to the first blocks 110, it is also possible to identify at least one particular reference block 140 for each second block 120, which reference block is homologous with the second block and does not comprise any studs, said reference block being arranged in a corresponding position to the second block but in a separate module M to that comprising the second block.

The identification of a reference block 130 makes it possible to define an original edge 111 on the first block 110 that corresponds to the edge of the reference block 130 when said reference block is superimposed on the first block 110, as is further clarified in Fig. 3.

The original edge 111 divides the first block 110 into a main body 112, which substantially corresponds to the reference block 130, and into a projection 113, which corresponds to a portion of the first block 110 that has been added with respect to the reference block 130.

The configuration and the dimensions of the projection 113 make it possible for the stud 100 and the clearance area 103 thereof to be positioned inside the first block 110.

In particular, the stud 100, more precisely the head 101 thereof, can be tangential to the original edge 111 or can intersect the original edge 111, or, again, can be arranged outside the original edge 111 and completely positioned inside the projection 113.

In the same way, it is also possible to identify an original edge 121 on the second blocks 120 that corresponds to the edge of the reference block 140 thereof when said reference block is superimposed on the second block 120, which original edge divides the second block 120 into a main body 122, which substantially corresponds to the reference block 140, and into a projection 123, which corresponds to a portion of the second block 120 that has been added with respect to the reference block 140.

The configuration and the dimensions of the projection 123 allow the entire clearance area 103 of the stud 100 to also be positioned inside the second block 120 (while the stud 100 is already inside the main body 122).

Both the projection 113 and the projection 123 extend in respective grooves that delimit the first block 110 or the second block 120 so as to obstruct said groove, at least in part.

In particular, the projection 113 can obstruct one of the grooves that delimit the first block by a fraction of more than 50% of the width thereof.

According to the invention, the projection fully obstructs the groove that delimits the first block 110 so as to form a bridge that connects the first block 110 to one or more blocks adjacent thereto (an example of this first block is also shown in Fig. 2).

### EXAMPLE

A studded 205/55 R16 tyre equipped with 190 studs was formed as described above and was subjected to a noise-emission test in which it was compared with a studded tyre having the same dimensions, which is produced by the same Applicant, but in which there are only 130 studs.

In particular, the noise-emission test was carried out by mounting the set of tyres to be analysed onto a Volkswagen Golf and measuring the noise inside the vehicle in four positions, two of which substantially correspond to the ears of the driver (respectively indicated as the "Front left" and ""Front right"), and two that substantially correspond to the ears of a passenger positioned in the centre of the rear seats (respectively indicated as the "Rear left" and "Rear right").

The measurements of the noise were taken by scanning the entire frequency spectrum, and subsequently combined to define an average.

Furthermore, the measurements of the noise were taken at two different speeds, at 60 km/h and 80 km/h, respectively, in two different driving conditions, at a constant speed and under coast-down conditions.

The results of the measurements are summarised in Table 1 below, in which each column indicates the combined intensity of the noise (measured in decibels) over the entire frequency spectrum and measured inside the cabin in the positions mentioned above when the tyres according to the invention (INV) were mounted on the car and when the comparison tyres (REF) were mounted.

**Table 1**

| Microphone position | Front left | | Front right | | Rear left | | Rear right | |
|---|---|---|---|---|---|---|---|---|
| tyres | INV | REF | INV | REF | INV | REF | INV | REF |
| Constant speed 60 Km/h | 70.3 | 72.0 | 67.2 | 68.5 | 70.3 | 71.8 | 69.8 | 71.4 |
| Constant speed 80 Km/h | 71.9 | 73.8 | 68.8 | 70.2 | 71.8 | 73.2 | 71.8 | 72.9 |
| Coast down 60 Km/h | 70.2 | 74.0 | 67.2 | 70.4 | 70.3 | 73.6 | 70.2 | 73.1 |
| Coast down 80 Km/h | 72.6 | 73.4 | 69.4 | 70.7 | 72.5 | 73.4 | 72.3 | 73.4 |

The analysis of the results shows how the noise produced by the tyre according to the invention is substantially lower than that recorded for the comparison tyre under every condition tested. This result is particularly surprising when taking into consideration the fact that the studded tyre according to the invention comprises 190 studs compared with the 130 of the comparison tyre, that is to say almost 50% more studs.

Furthermore, on account of the greater degree of positioning freedom of the studs in the tread band, the studded tyre according to the invention allows for substantial uniformity of the number of studs present in the footprint area.

This feature influences the performance of the studded tyre particularly positively in terms of road holding, both during traction (acceleration and braking) and when turning, as proven by subsequent tests.

## Claims

1. Studded tyre comprising a tread band (2), in which respective pluralities of grooves and blocks are made, which as a whole define a tread pattern of said tyre in which a module (M) is identified, which module extends between opposite axial ends of said tread band and is the minimum tread band portion, a repeated sequence of which configuration is provided along the circumferential extent of the tread band in order to form said tread pattern, said tread band (2) comprising:
- at least one first block (110) on which a stud (100) is provided,
- at least one reference block (130) which does not comprise any studs and is arranged in the same position to said first block (110) in a separate module (M) to that comprising said first block,
wherein
- an original edge (111) is identified on said first block (110) and corresponds to the edge of said reference block when said reference block is superimposed on said first block,
- said original edge (111) divides said first block (110) into a main body (112), which substantially corresponds to said reference block, and into a projection (113), which corresponds to a portion of said first block that is added with respect to said reference block, and
- said stud (100) is positioned in said first block so as to:
i. touch said original edge (111), or
ii. be arranged entirely inside said projection (113) and
**characterised in that** said projection (113) extends so as to connect said first block (110) to an adjacent block.

2. Tyre according to claim 1, wherein a plurality of said first blocks (110) are provided on said tread band (2).

3. Tyre according to claim 2, wherein said plurality of said first blocks (110) represents a fraction of less than 20% of the studded blocks provided on said tread band.

4. Tyre according to claim 3, wherein said plurality of said first blocks (110) represents a fraction of between 5% and 15% of the studded blocks provided on said tread band.

5. Tyre according to any one of the preceding claims, wherein a number of studs is provided in each module that is equal to a predefined number that may be increased or decreased by one.

6. Tyre according to any one of the preceding claims, wherein said tread band is divided by an equatorial plane (X) of said tyre into a first region (4) and into a second region (5) that is axially opposite, and said studs are provided in circumferential tracks that are symmetrically defined in said first and second region (4, 5) at different distances from said equatorial plane.

7. Tyre according to any one of the preceding claims, wherein each module is divided by an equatorial plane (X) of said tyre into a first region (4) and into a second region (5), which extend on opposite sides of said equatorial plane, and in each module in which an even number of studs is provided, said studs are equally distributed between said first region (4) and said second region (5).

8. Tyre according to any one of the preceding claims, wherein, in each module in which an even number of studs is provided, said studs are positioned at different distances from an equatorial plane (X) of said tyre.

9. Tyre according to any one of the preceding claims, wherein, in at least 90% of all of said modules (M), said studs are positioned at different distances from an equatorial plane of said tyre.

10. Tyre according to any one of the preceding claims, wherein a maximum number of said first blocks (110) that is equal to two is provided for each module.

## Patentansprüche

1. Spikereifen, umfassend ein Laufflächenband (2), in dem jeweilige Mehrzahlen von Rillen und Blöcken hergestellt sind, die als ein Ganzes ein Laufflächenmuster des Reifens definieren, in dem ein Modul (M) identifiziert ist, welches Modul sich zwischen gegenüberliegenden axialen Enden des Laufflächenbandes erstreckt und der kleinste Laufflächenbandabschnitt ist, von dessen Konfiguration eine wiederholte Folge entlang der umfänglichen Erstreckung des Laufflächenbandes vorgesehen ist, um das Laufflächenmuster zu bilden, wobei das Laufflächenband (2) umfasst:
- mindestens einen ersten Block (110), auf dem ein Spike (100) vorgesehen ist,
- mindestens einen Bezugsblock (130), der keinen Spike umfasst und in einem getrennten Modul (M) von dem, das den ersten Block umfasst, in der gleichen Position wie der erste Block (110) angeordnet ist. wobei
- eine Ursprungskante (111) auf dem ersten Block (110) identifiziert ist und der Kante des Bezugsblocks entspricht, wenn der Bezugsblock dem ersten Block überlagert ist,
- die Ursprungskante (111) den ersten Block (110) in einen Hauptkörper (112), der im Wesentlichen dem Bezugsblock entspricht, und in einen Vorsprung (113) teilt, der einem Abschnitt des ersten Blocks entspricht, der in Bezug auf den Bezugsblock hinzugefügt ist, und
- der Spike (100) im ersten Block positioniert ist, um:
i. die Ursprungskante (111) zu berühren oder
ii. zur Gänze innerhalb des Vorsprungs (113) angeordnet zu sein, und
**dadurch gekennzeichnet, dass** der Vorsprung (113) sich so erstreckt, dass er den ersten Block (110) mit einem benachbarten Block verbindet.

2. Reifen nach Anspruch 1, wobei eine Mehrzahl der ersten Blöcke (110) auf dem Laufflächenband (2) vorgesehen ist.

3. Reifen nach Anspruch 2, wobei die Mehrzahl der ersten Blöcke (110) einen Anteil von weniger als 20 % der auf dem Laufflächenband vorgesehenen Spikeblöcke darstellt.

4. Reifen nach Anspruch 3, wobei die Mehrzahl der ersten Blöcke (110) einen Anteil von 5 % bis 15 % der auf dem Laufflächenband vorgesehenen Spikeblöcke darstellt.

5. Reifen nach einem der vorhergehenden Ansprüche, wobei eine Anzahl von Spikes in jedem Modul vorgesehen ist, die gleich einer vordefinierten Anzahl ist, die um eins erhöht oder verringert werden kann.

6. Reifen nach einem der vorhergehenden Ansprüche, wobei das Laufflächenband durch eine Äquatorialebene (X) des Reifens in eine ersten Region (4) und in eine zweite Region (5) geteilt ist, die axial gegenüberliegt, und die Spikes in umfänglichen Spuren vorgesehen sind, die in der ersten und zweiten Region (4, 5) in unterschiedlichen Abständen von der Äquatorialebene symmetrisch definiert sind.

7. Reifen nach einem der vorhergehenden Ansprüche, wobei jedes Modul durch eine Äquatorialebene (X) des Reifens in eine ersten Region (4) und in eine zweite Region (5) geteilt ist, die sich auf gegenüberliegenden Seiten der Äquatorialebene erstrecken, und die Spikes in jedem Modul, in dem eine ungerade Anzahl von Spikes vorgesehen ist, gleichmäßig zwischen der ersten Region (4) und der zweiten Region (5) verteilt sind.

8. Reifen nach einem der vorhergehenden Ansprüche, wobei die Spikes in jedem Modul, in dem eine gerade Anzahl von Spikes vorgesehen ist, in unterschiedlichen Abständen von einer Äquatorialebene (X) des Reifens positioniert sind.

9. Reifen nach einem der vorhergehenden Ansprüche, wobei die Spikes in mindestens 90 % aller Module (M) in unterschiedlichen Abständen von einer Äquatorialebene des Reifens positioniert sind.

10. Reifen nach einem der vorhergehenden Ansprüche, wobei eine maximale Anzahl der ersten Blöcke (110), die gleich zwei ist, für jedes Modul vorgesehen ist.

## Revendications

1. - Pneu à crampons comprenant une bande de roulement (2), dans laquelle des pluralités respectives de rainures et de pavés sont réalisées, qui définissent dans leur ensemble une sculpture dudit pneu dans lequel un module (M) est identifié, lequel module s'étend entre des extrémités axiales opposées de ladite bande de roulement et constitue la partie de bande de roulement minimale, une séquence répétée de cette configuration est fournie le long de l'étendue circonférentielle de la bande de roulement afin de former ladite sculpture, ladite bande de roulement (2) comprenant :
- au moins un premier pavé (110) sur lequel est prévu un crampon (100),
- au moins un pavé de référence (130) qui ne comprend aucun crampon et est agencé dans la même position que ledit premier pavé (110) dans un module distinct (M) de celui comprenant ledit premier pavé, dans lequel
- un bord d'origine (111) est identifié sur ledit premier pavé (110) et correspond au bord dudit pavé de référence lorsque ledit pavé de référence est superposé audit premier pavé,
- ledit bord d'origine (111) divise ledit premier pavé (110) en un corps principal (112), qui correspond sensiblement audit pavé de référence, et en une saillie (113), qui correspond à une partie dudit premier pavé qui est ajoutée par rapport audit pavé de référence, et
- ledit crampon (100) est positionné dans ledit premier pavé de manière à :
i. être en contact avec ledit bord d'origine (111), ou
ii. être agencé entièrement à l'intérieur de ladite saillie (113) et
**caractérisé en ce que** ladite saillie (113) s'étend de manière à relier ledit premier pavé (110) à un pavé adjacent.

2. Pneu selon la revendication 1, dans lequel une pluralité desdits premiers pavés (110) sont prévus sur ladite bande de roulement (2).

3. Pneu selon la revendication 2, dans lequel ladite pluralité desdits premiers pavés (110) représente une fraction inférieure à 20% des pavés à crampons prévus sur ladite bande de roulement.

4. Pneu selon la revendication 3, dans lequel ladite pluralité desdits premiers pavés (110) représente une fraction comprise entre 5% et 15% des pavés à crampons prévus sur ladite bande de roulement.

5. Pneu selon l'une quelconque des revendications précédentes, dans lequel un nombre de crampons est prévu dans chaque module lequel est égal à un nombre prédéfini pouvant être augmenté ou diminué de un.

6. Pneu selon l'une quelconque des revendications précédentes, dans lequel ladite bande de roulement est divisée par un plan équatorial (X) dudit pneu en une première région (4) et en une deuxième région (5) axialement opposée, et lesdits crampons sont prévus dans des pistes circonférentielles définies symétriquement dans lesdites première et deuxième régions (4, 5) à différentes distances dudit plan équatorial.

7. Pneu selon l'une quelconque des revendications précédentes, dans lequel chaque module est divisé par un plan équatorial (X) dudit pneu en une première région (4) et en une deuxième région (5), qui s'étendent sur des côtés opposés dudit plan équatorial, et dans chaque module dans lequel un nombre pair de crampons est prévu, lesdits crampons sont équirépartis entre ladite première région (4) et ladite deuxième région (5).

8. Pneu selon l'une quelconque des revendications précédentes, dans lequel, dans chaque module dans lequel un nombre pair de crampons est prévu, lesdits crampons sont positionnés à des distances différentes d'un plan équatorial (X) dudit pneu.

9. Pneu selon l'une quelconque des revendications précédentes, dans lequel, dans au moins 90% de l'ensemble desdits modules (M), lesdits crampons sont positionnés à des distances différentes d'un plan équatorial dudit pneu.

10. Pneu selon l'une quelconque des revendications précédentes, dans lequel un nombre maximal desdits premiers pavés (110) qui est égal à deux est prévu pour chaque module.
